## Europäisches Patentamt
## European Patent Office
## Office européen des brevets

(11) Numéro de publication: **0 192 309**
**B1**

(12) # FASCICULE DE BREVET EUROPÉEN

(45) Date de publication du fascicule du brevet:
06.12.89

(51) Int. Cl.⁴: **G 02 B 23/12**, G 02 B 23/08

(21) Numéro de dépôt: 86200245.8

(22) Date de dépôt: 19.02.86

(54) Appareil d'observation mixte jour-nuit.

(30) Priorité: 22.02.85 FR 8502575

(43) Date de publication de la demande:
27.08.86 Bulletin 86/35

(45) Mention de la délivrance du brevet:
06.12.89 Bulletin 89/49

(84) Etats contractants désignés:
BE DE FR GB IT NL SE

(56) Documents cité:
DE-A-2 704 186
GB-A-1 045 422
GB-A-2 143 964
US-A-4 145 119

(73) Titulaire: **TELECOMMUNICATIONS RADIOELECTRIQUES ET TELEPHONIQUES T.R.T., 88, rue Brillat Savarin, F-75013 Paris (FR)**
(84) Etats contractants désignés: **FR**

(73) Titulaire: **N.V. Philips' Gloeilampenfabrieken, Groenewoudseweg 1, NL- 5621 BA Eindhoven (NL)**
(84) Etats contractants désignés: **BE DE GB IT NL SE**

(72) Inventeur: **Loy, Fernand SOCIETE CIVILE S.P.I.D., 209 Rue l'Université, F-75007 Paris (FR)**
Inventeur: **Espie, Jean- Luc SOCIETE CIVILE S.P.I.D., 209 Rue l'Université, F-75007 Paris (FR)**

(74) Mandataire: **Pyronnet, Jacques, Société Civile S.P.I.D. 209 rue de l'Université, F-75007 Paris (FR)**

## Description

L'invention concerne un appareil d'observation mixte jour-nuit pour la conduite d'un véhicule contenu dans un boîtier unique comportant une voie de jour et une voie de nuit, un premier réflecteur d'entrée mobile destiné à dévier les rayons lumineux d'entrée issus du champ de vision au moins dans la direction de l'axe optique de la voie de nuit, la voie de nuit étant constituée par un objectif, un tube intensificateur de lumière et un oculaire, la voie de jour étant constituée par un système optique de grossissement 1 comportant au moins un deuxième réflecteur de sortie.

En tant qu'appareil d'observation, l'appareil selon l'invention est tel que le grossissement est égal à 1 pour la voie de jour et de l'ordre de 1 pour la voie de nuit. Pour les deux voies, on s'efforce d'obtenir le champ de vision le plus large possible. A travers ce type d'appareil qui est monté à travers la paroi d'un véhicule, de préférence à traves le blindage d'un véhicule blindé, la vision est périscopique. L'invention s'applique notamment à un épiscope destiné à la conduite d'un char de combat.

Des certificats d'utilité français 2 377 647 et 2 377 648 on connaît un appareil de visée de jour et de nuit, c'est-a-dire un appareil optique périscopique contenu dans un boîtier unique pouvant fonctionner pour tous les degrés d'éclairage de l'objet observé, aussi bien sous un soleil éclatant que de nuit par temps couvert. Lorsqu'un tel appareil est monté dans un véhicule, il peut consister en un ensemble hermétique pouvant s'adapter dans l'ouverture normalisée prévue jusqu'alors, pour recevoir aussi bien des dispositifs de visée de nuit que des dispositifs de visée de jour. Ces caractéristiques techniques et ces fonctions sont aussi recherchées au départ pour l'appareil d'observation décrit ci-dessous. Il est en effet très désavantageux dans les deux cas d'utiliser des appareils optiques amovibles et distincts pour le jour et pour la nuit notamment à cause de la nécessité d'une part de procéder à des opérations de commutation, pendant lesquelles la vision à travers l'appareil optique n'est plus possible, d'autre part de devoir ranger l'appareil inutilisé sans risque d'endommagement de ce dernier ni d'encombrement de l'habitacle du véhicule qui est exigu.

Le compactage en un seul boîtier de dimensions normalisées est relativement facile à obtenir dans un appareil de visée pour lequel les champs de visée sont étroits, de l'ordre de 5° à 10° et pour lequel les grossissements obtenus sont forts, de l'ordre de 5 à 10, le véhicule muni de l'appareil de visée étant normalement à l'arrêt lors de la visée. Par contre l'observation doit s'effectuer à vision normale particulièrement pour la conduite de véhicule, c'est-à-dire pour un grandissement faible égal ou sensiblement égal à 1 ce qui, il est vrai, va dans le sens d'un champ de vision large, mais, comme déjà indiqué ci-dessus, on souhaite dans ce cas un champ de vision le plus large possible et il faut veiller à ce que le compactage obtenu du fait de réunir dans un même boîtier un appareil d'observation de jour et un appareil d'observation de nuit ne s'accompagne pas d'une diminution du champ de vision.

A ce sujet, on connaît du document GB-A-2 143 964 un appareil d'observation pour véhicule comportant au moins trois systèmes d'observation dont les champs, pour chaque système d'observation sont trop étroits pour permettre la conduite du véhicule.

L'invention a pour but de réaliser un appareil d'observation mixte jour-nuit à grand champ de visicon contenu dans un boîtier unique pouvant s'adapter dans l'ouverture normalisée prévue jusqu'à ce jour pour recevoir aussi bien des dispositifs d'observation de nuit que des dispositifs d'observation de jour.

Un autre but de l'invention est de réaliser les adaptations nécessaires à la combinaison en un boîtier unique d'un appareil d'observation de jour et d'un appareil d'observation de nuit.

Ces buts sont atteints du fait que l'appareil d'observation défini en préambule est remarquable en ce que les axes optiques de la voie de jour et de la voie de nuit s'étendent dans un même plan parallèle à un axe longitudinal dudit véhicule, que le passage de la voie de nuit à la voie de jour ou réciproquement s'effectue par des moyens de déplacement pour déplacer au moins le premier réflecteur parallèlement audit plan de façon à diriger soit vers l'axe optique de la voie de jour soit vers l'axe optique de la voie de nuit les rayons lumineux issus du champ de vision, que les axes optiques de la voie de jour et de la voie de nuit sont inclinés l'un vers l'autre vers le haut d'un de l'ordre d'une quinzaine de degrés angle, et que lesdits moyens de déplacement impriment audit premier réflecteur une rotation de l'ordre de une à quelques dizaines de degrés, des moyens de tourillonnement étant prévus à cet effet entre le support du premier réflecteur et ledit boîtier. L'inclinaison mutuelle des axes optiques est rendue possible du fait que l'objectif de la voie de nuit a un diamètre plus faible que le tube intensificateur de lumière sous jacent, le premier réflecteur étant à même de diriger les rayons lumineux entrants vers l'un ou l'autre axe optique par exemple par un mouvement de rotation d'un angle faible, de l'ordre de dix à vingt degrés, ce qui rend l'encombrement de l'appareil d'observation très faible.

La mise en service de la voie de nuit engendre, à partir du tube intensificateur de lumière des rayons lumineux qui se reflètent notamment sur le visage de l'observateur. Du fait de l'association dans un même boîtier des deux systèmes de vision jour et nuit, ces rayons lumineux reflétés peuvent, au moins pour partie, traverser de l'intérieur vers l'extérieur du véhicule le système d'observation de jour, ce qui signalerait le véhicule à un observateur étranger, chose que l'on souhaite éviter. Pour cette raison, l'appareil d'observation mixte jour-nuit selon l'invention peut être remarquable en ce qu'il comporte des moyens d'obturation de la voie de jour automatiques ainsi que des moyens de mise en service dudit tube intensificateur de lumière automatiques lors du passage de la voie de jour à la voie de nuit qui fait passer le deuxième réflecteur d'une position active à une position escamotée.

La description qui suit en regard des dessins annexés, le tout donné à titre d'exemple, fera bien comprendre comment l'invention peut être réalisée.

La figure 1 est une vue latérale en élévation en coupe, du boîtier et de la partie optique d'un appareil d'observation selon l'invention.

La figure 2 représente, selon une vue semblable à celle de la figure 1 un mode de réalisation des moyens de déplacement simultané des premier et deuxième réflecteurs.

La figure 3 est une vue agrandie partielle avec arrachement de la figure 2 montrant le mode de réalisation des moyens de déplacement du deuxième réflecteur.

La figure 4 représente en coupe partielle vue de face selon la coupe IV - IV de la figure 3 la partie des moyens de déplacement du deuxième réflecteur relative à ce dernier.

Sur les différentes figures les mêmes références désignent les mêmes éléments avec les mêmes fonctions.

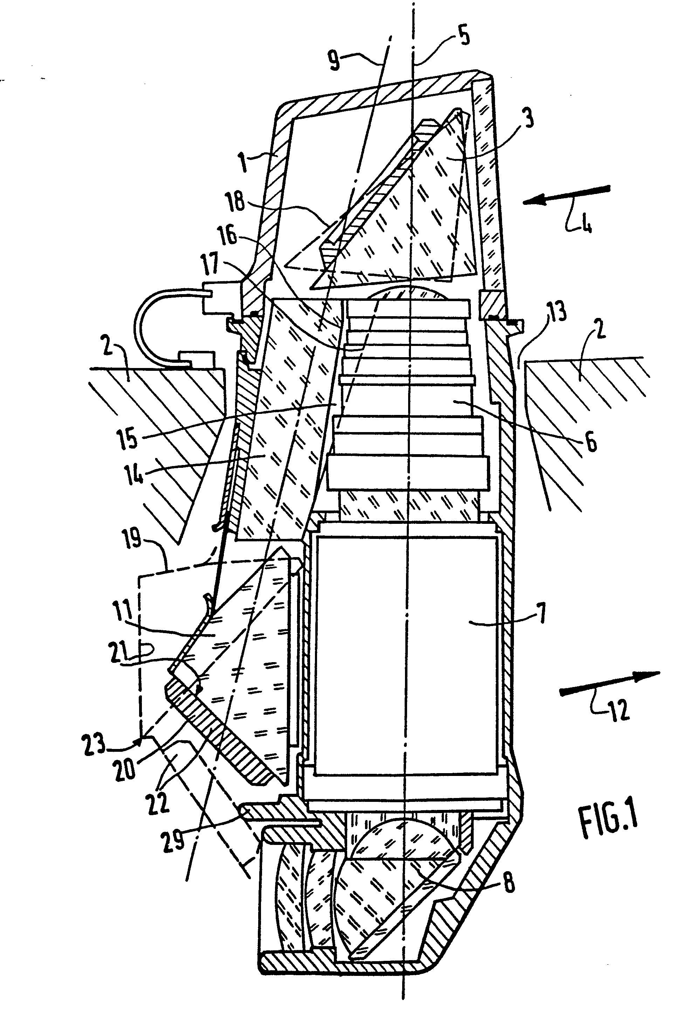

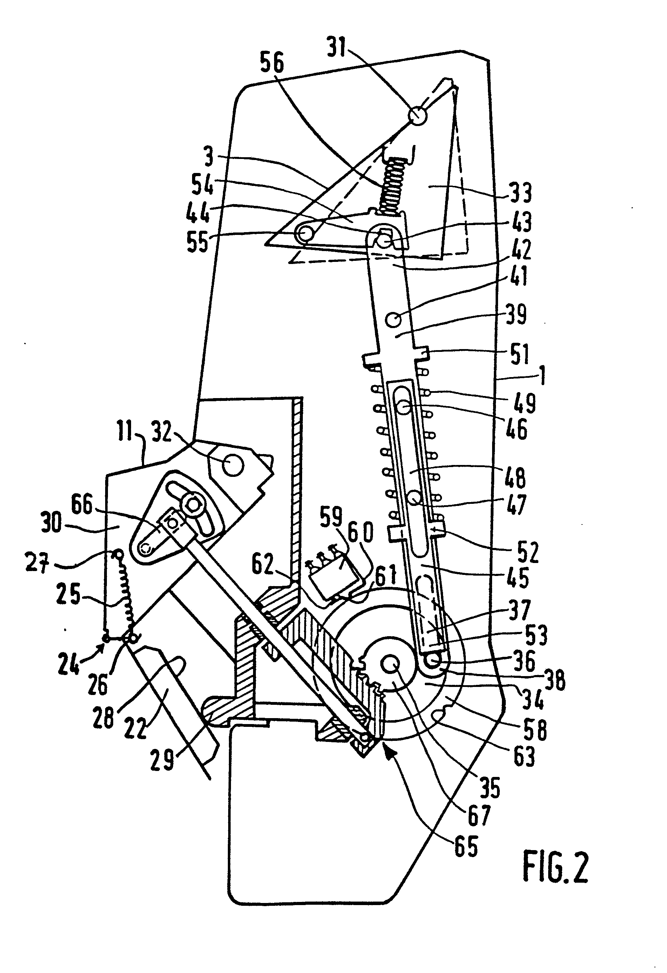

L'appareil d'observation représenté à la figure 1 comporte un boîtier 1 disposé à travers la paroi 2 d'un véhicule, de préférence blindé, et dans lequel un premier réflecteur d'entrée mobile 3 peut prendre deux positions différentes pour dévier les rayons lumineux d'entrée issus du champ de vision et symbolisés par une flèche 4, selon deux directions différentes sensiblement perpendiculaires toutes les deux à la paroi 2. De préférence, le réflecteur 3 est un prisme de section triangulaire à réflexion totale il pourrait aussi s'agir d'un miroir. Dans la position du réflecteur 3 représentée en trait plein, les rayons lumineux d'entrée sont, après réflexion, dirigés vers un axe optique 5, dit axe optique de la voie de nuit, le long duquel s'étendent un objectif 6, un tube intensificateur de lumière 7 et un oculaire 8. Dans la position représentée en trait interrompu en superposition les rayons d'entrée sont dirigés vers un axe optique 9, dit axe optique de la voie de jour, la voie de jour étant constituée par un système optique de grossissement 1, à prismes ou à miroirs comportant au moins un deuxième réflecteur de sortie 11. Les axes optiques 5 et 9 s'étendent dans un même plan parallèle à un axe longitudinal 12 du véhicule ce plan étant en l'occurrence celui de la figure 1. Le passage de la voie de nuit à la voie de jour ou réciproquement s'effectue par des moyens de déplacement dont un mode de réalisation préféré est décrit plus en détail ci-dessous en référence aux figures 2, 3 et 4. Ces moyens de déplacement servent à déplacer au moins le premier réflecteur 3 pour le faire passer de l'une à l'autre de ses deux positions indiquées ci-dessus.

L'ouverture 13 dans laquelle est fixé l'appareil d'observation selon l'invention est de préférence celle qui est normalement prévue pour recevoir aussi bien des dispositifs d'observation de nuit que des dispositifs d'observation de jour, la disposition mixte décrite ci-dessus permettant cette adaptation économique sans perte notable du champ de vision; le mode de fixation avec les étanchéités nécessaires est classique et connu, raison pour laquelle il n'est pas représenté sur la figure 1, ni décrit.

Le système optique de la voie de jour représenté à la figure 1 est constitué par trois prismes, le prisme d'entrée 3, un prisme intermédiaire 14 de forme sensiblement parallélépipédique et un prisme de sortie à réflexion totale qui constitue le deuxième réflecteur 11. L'indice de réfraction du verre utilisé pour ces trois prismes est élevé de l'orde de 1, 6, ce qui, pour une section donnée disponible pour la voie de jour à travers l'ouverture 13, permet d'obtenir un grand champ. A ce sujet, il est à noter que le prisme intermédiaire 14 enveloppe partiellement l'objectif 6 de la voie de nuit de forme sensiblement cylindrique ou légèrement tronconique au moyen d'une échancrure 15 visible sur la figure 1 entre le trait plein 16 et le trait interrompu 17. L'échancrure 15, de forme sensiblement cylindrique, peut être obtenue par usinage du prisme 14. L'encombrement réduit de l'appareil est ainsi obtenu en encastrant l'objectif de la voie de nuit dans le prisme intermédiaire de La voie de jour. Le champ de vue de la voie de jour comporte donc une légère occultation centrale qui n'est pas gênante pour l'observateur compte tenu de sa petitesse vis à vis de l'écartement interpupillaire.

Si de plus l'objectif de la voie de nuit est de forme légèrement tronconique amincie vers le haut comme représenté sur la figure 1, il est avantageux que les axes optiques 5 et 9 soient inclinés l'un vers l'autre vers le haut d'un léger angle, de l'ordre d'une quinzaine de degrés, ce qui permet de réduire le déplacement du premier réflecteur 3 à une rotation de faible amplitude et donc de limiter l'encombrement de ce réflecteur surtout dans le cas où il s'agit d'un prisme. Sur la figure 1, la rotation du prisme 3 entre ses deux positions stables est égale à 10° environ. De préférence, le mécanisme qui commande le déplacement du premier réflecteur 3, ce déplacement pouvant être aussi un mouvement de translation avant-arrière, qui fait passer ce réflecteur de sa position représentée en trait plein à celle représentée en trait interrompu, commande aussi le mouvement du deuxième réflecteur 11 entre une position escamotée pour l'observation de nuit représentée en trait plein et une position active représentée par le trait interrompu 19. En position d'observation de jour, le système optique constitué par les trois prismes 3, 14 et 11 équivaut à l'appareil d'observation classique de jour qui est constitué par un prisme unique à deux faces réfléchissantes sous la forme d'un périscope. En position escamotée, pour l'observation de nuit, la deuxième position stable obtenue de préférence par rotation pour le prisme 11 est telle que l'espace qui environne l'oculaire 8 est dégagé pour permettre l'observation à travers l'oculaire et que parmi le rayonnement lumineux issu du tube intensificateur de lumière 7, reflété par le visage de l'observateur, et qui serait susceptible de pénétrer par la face de sortie 21 du deuxième prisme réflecteur 11, seule une petite partie puisse traverser les prismes 14 et 3. Même si ce reflet lumineux est faible il peut être suffisant pour signaler la présence du véhicule à un observateur étranger dans les parages du véhicule. Pour cette raison on prévoit, de préférence, la mise en service automatique d'un obturateur de la voie de jour lors du passage de la voie de jour à la voie de nuit. Dans le mode de réalisation représenté à la figure 1 cette obturation est effectuée au moyen d'un volet obturateur 22 articulé sensiblement selon l'arête 23 du prisme 11 sur le support de ce dernier en des points 24 (voir figure 2) et maintenu en position stable d'ouverture pour l'observation de jour et de fermeture pour l'observation de nuit par obturation de la face 21 de sortie du prisme 11, au moyen d'un ressort 25 représenté à la figure 2. L'ancrage du ressort 25 en un point 26 sur le volet 22 et en un point 27 sur le support 30 du prisme 11 est conçu de façon telle qu'un couple de rappel soit exercé sur le volet pour solliciter ce dernier soit en direction de la face 21 du prisme 11 soit dans la direction opposée selon la position angulaire du volet par rapport au prisme, ce qui implique que la projection du (des) point(s) 26 sur le plan de la figure 2 se situe soit d'un côté de la droite qui passe par les projections des points 24 et 27 dans ce plan soit du côté opposé, selon cette position angulaire. Dans la position active du deuxième réflecteur 11 seule représentée sur la figure 2 et représentée en trait interrompu sur la figure 1, le volet 22, qui a été ouvert manuellement par l'observateur pour permettre l'observation de jour, est en butée par sa face externe 28 contre un bossage 29 prévu à cet effet sur le boîtier 1. Lors du passage à la position de nuit, par une rotation simultanée dans le sens direct des deux prismes 3 et 11 autour de moyens de tourillonnement respectifs 31 et 32 dans le boîtier 1, la face externe 28 du volet 22 glisse le long du bossage 29, les points 24 et 26 se rapprochent de ce bossage et le volet 22 est entraîné en rotation dans le sens rétrograde par rapport au prisme 11. Pour un angle de rotation donné du prisme 11 selon lequel les points 24, 26 et 27 sont dans un même plan, le volet 22 se trouve dans une position d'équilibre instable au delà de laquelle le ressort 25 le sollicite dans sa position de fermeture comme représenté en trait plein à la figure 1 Pour améliorer les conditions de vision nocturne de l'observateur il est prévu, de préférence, de munir la face externe 28 du volet 22 d'un revêtement en matériau souple épais, représenté en coupe en 20 sur la figure 1. Ce revêtement sert de dispositif d'appui pour le front de l'observateur qui peut ainsi regarder à travers l'oculaire 8 sans être outre mesure gêné par les mouvements brusques éventuels du véhicule porteur. De préférence l'oculaire 8 représenté à la figure 1 est une loupe bioculaire à grand champ telle que décrite dans la demande de brevet français N° 2 535 860. Ce bioculaire permet d'obtenir un champ de vision de l'ordre de 80° en gisement et de 50° en site.

Sur la figure 2 est représenté un mode de réalisation préféré du mécanisme permettant de déplacer les premier et deuxième réflecteurs (prismes) 3 et 11 simultanément de l'une de leurs positions stables pour la vision de jour, respectivement de nuit, vers l'autre position stable pour la vision de nuit, respectivement de jour. Sur cette figure, les éléments optiques ne sont pas représentés, pour ne pas surcharger inutilement le dessin, à l'exception des deux prismes 3 et 11 dont seuls les supports respectifs 33 et 30 sont visibles sur cette vue latérale. Le déplacement du prisme 3 s'effectue à partir d'une roue 34 actionnable manuellement dans le boîtier 1, articulée autour d'un axe ou arbre de commande 35 supporté à rotation dans le boîtier, à partir d'une manivelle non représentée qui est accessible à l'extérieur du boîtier. La roue 34 supporte un ergot 36 qui s'engage dans une fente 37 réalisée à une extrémité 38 d'un levier 39, ce dernier étant articulé autour d'un pivot 41 solidaire du boîtier et disposé entre la roue 34 et le prisme 3. La deuxième extrémité 42 du levier 39 porte un ergot 43 qui s'engage dans une fente ou rainure 44 liée au support 33 du prisme 3. Des moyens de ressort sont prévus pour solliciter en permanence l'ergot 36 en direction de l'extrémité 38, les deux positions stables étant obtenues lorsque l'ergot 36 est en butée à l'extrémité inférieure de la fente 37, soit d'un côté soit de l'autre par rapport à l'arbre 35. Ces moyens de ressort sont par exemple constitués de façon non représentée par un ressort travaillant en extension dont une extrémité est ancrée sur l'ergot 36 et l'autre extrémité sur le boîtier dans la partie basse de ce dernier. De préférence, ces moyens de ressort consistent, comme représenté à la figure 2, en un coulisseau 45 monté sur le levier 39 et mobile en translation par rapport à ce dernier au moyen de deux ergots 46 et 47 sur le levier 39 pouvant coulisser dans une fente ou rainure 48 prévue à cet effet dans le coulisseau 45 et en un ressort spiral 49 représenté en coupe qui travaille en compression entre un épaulement 51 du levier 39 et un épaulement 52 du coulisseau de façon telle que l'extrémité libre 53 du coulisseau exerce en permanence une force dirigée vers le bas contre l'ergot 36. Si la fente ou rainure 44 est pratiquée directement dans le support 33 du prisme 3 un certain jeu doit être prévu pour le libre passage et le coulissement de l'ergot 43 dans cette fente, ce qui peut résulter en un léger jeu et en des vibrations du prisme 3, inacceptables pour une bonne observation. Pour éliminer ce jeu, il est prévu une pièce 54 mobile en rotation autour d'un axe 55 sur le support de prisme 33. La fente ou rainure 44, creusée dans la pièce 54, de forme tronconique et débouchant vers le bas par sa partie évasée reçoit l'ergot 43 qui est maintenu en permanence au contact des deux bords de la fente 44 du fait que des moyens de ressort 56 sollicitent l'extrémité libre de la pièce 54 vers le bas en direction de l'extrémité 42 du levier 39. Les vibrations du prisme 3 dans l'une ou l'autre de ses positions stables représentées en trait plein et en trait interrompu sur la figure 2 sont ainsi évitées pour l'essentiel, les vibrations dues aux articulations autour des pivots axes et tourillons 41, 55 et 31 étant quant-à elles négligeables. On notera que pour faire passer le prisme 3 de l'une à l'autre position stable il faut faire tourner la roue 34 d'un demi tour environ, cet angle dé rotation n'étant par ailleurs pas critique et pouvant être nettement inférieur ou supérieur à π.

De préférence, le passage de la position d'observation de jour à la position d'observation de nuit s'accompagne de la mise en service automatique du tube intensificateur de lumière 7. Ceci est réalisé par exemple comme représenté à la figure 2 par des moyens constitués d'une roue 58 portée par l'arbre 35 et d'un microcontact 59 fixé dans le boîtier 1. La roue 58 agit comme une came sur un ressort à lame 60 dont l'extrémité libre est maintenue appuyée contre le poussoir 62 du microcontact 59 du fait qu'une saillie 61 du ressort 60 située du côté opposé par rapport au microcontact est maintenue pressée contre la périphérie de la roue 58. Pour la position de nuit, cette saillie descend dans une cannelure axiale 63 prévue à cet effet à la périphérie de la roue 58, ce qui a pour conséquence de relâcher le poussoir 62 et d'établir le contact électrique pour l'alimentation électrique du tube 7 dans le microcontact 59. Pour toute position en rotation différente de la roue 58 et en particulier pour la position d'observation de jour, le contact électrique dans le microcontact 59 est rompu et le tube intensificateur de lumière 7 n'est pas alimenté.

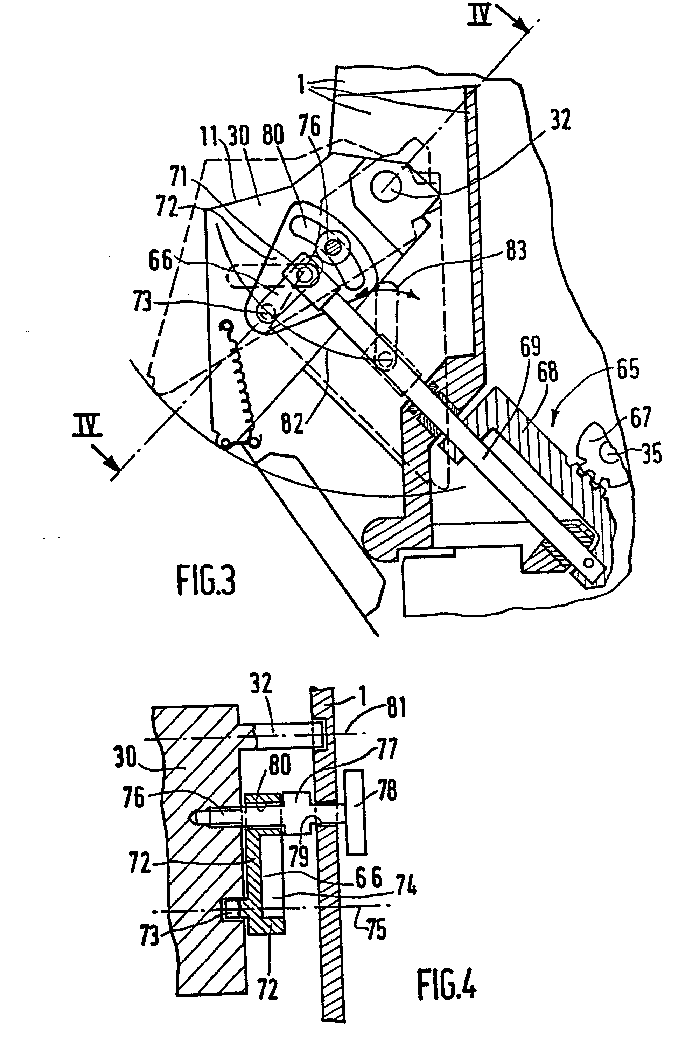

Les moyens de déplacement du deuxième réflecteur représentés en détail sur les figures 3 et 4 consistent essentiellement en un dispositif à crémaillère 65 représenté seulement sur les figures 2 et 3 qui coopère avec une rainure 66 d'orientation variable sur le support 30 du deuxième réflecteur (prisme) 11, la rainure 66 étant représentée sur les figures 2, 3 et 4. Le dispositif à crémaillère 65 est lui-même constitué par une roue dentée 67, portée par l'arbre 35, qui engrène dans une crémaillère 68 solidaire d'une tige 69. La tige 69 coulisse dans deux paliers ménagés dans le boîtier selon un mouvement de translation en direction du support de prisme 11 et son extrémité libre comporte un pion 71 qui s'engage avec un faible jeu dans la rainure 66. La rainure 66 est pratiquée dans une pièce 72 mobile en rotation autour d'un pivot 73 dans le support de prisme 30 et on notera qu'une extrémité 74 de la rainure 66 est située sur l'axe 75 du pivot 73. Des moyens de blocage constitués par une vis 76 sont prévus pour rendre la pièce mobile 72 fixe contre le support de prisme 30 dans toute position relative souhaitée entre ces éléments 72 et 30. La vis 76 est vissée dans le support 30 et, de préférence une partie de sa tige traverse une fente 80 en arc de cercle pratiquée dans la pièce 72, cet arc de cercle ayant son centre sur l'axe 75. Sur la figure 4, la pièce 72 est représentée non bloquée. On épaulement, pratiqué sur la tige de la vis 76 permet ce blocage qui s'effectue manuellement en manoeuvrant la tête 78 de la vis. De préférence, la tige de la vis 76 traverse librement le boîtier 1 par une ouverture 79 représentée seulement en section à la figure 4, cette ouverture étant constituée par une fente en arc de cercle dont le centre est sur l'axe 81 des tourillons 32. En principe la vis 76 n'est jamais au contact des parois de la fente 79.

Dans la position d'observation de jour ou position active représentée à la figure 3, l'observateur peut régler la position en rotation du deuxième réflecteur afin d'obtenir le meilleur confort visuel possible. Pour cela, il lui suffit de desserrer la vis 76 et de la pousser par sa tête 78 dans la fente 79. Si la poussée s'exerce vers le bas (respectivement vers le haut), cela a pour effet de faire basculer le prisme 11 vers le bas (respectivement vers le haut), le pion 71-conservant une position fixe qui lui est imposée par la position elle-même fixe de la tige 69 et les axes 75, 81 plus l'axe de la vis 76 conservant entre eux la même position relative puisque solidaires tous trois du support 30. Pendant ce mouvement, la fente 66 glisse le long du pion 71 et la pièce 72 acquiert par rapport au support 30 une orientation compatible avec la structure du mécanisme décrit ci-dessus. Sur les figures 2 et 3 les trois axes précités 74, 76, 81 sont représentés dans un même plan, ce qui n'est pas obligatoire mais qui assure une position de réglage médiane, la pièce 72 présentant de préférence un plan de symétrie, position à partir de laquelle le même débattement angulaire du prisme est possible dans l'un ou l'autre sens de rotation. De préférence, la course en rotation du prisme 11 d'un côté ou de l'autre de la position médiane représentée sur les figures est limitée du fait que la tige de la vis 76 vienne en butée contre l'une ou l'autre des extrémités de la fente 80. On a représenté en trait interrompu à la figure 3 le support 30 et la fente 66 en position haute maximale. Lorsqu'une position adéquate a été obtenue par l'observateur, ce dernier visse la vis 76 de façon à immobiliser la pièce 72 contre le support 30. Pour un observateur donné ce réglage est en principe définitif. Quelle que soit cette position de départ obtenue par réglage, le retour à la position d'observation de nuit ramène toujours le prisme 11 à la même position escamotée, par glissement du pion 71 contre les bords de la rainure 66, cette position étant représentée en trait interrompu sur la figure 3 (éléments 30, 66 et 71). La position escamotée est celle pour laquelle le pion 71 se trouve sur l'axe 75 après que ce dernier ait décrit un arc de cercle 82 centré en 81 et on notera que, dans cette position escamotée, du fait de la coïncidence des éléments 71 et 75, la manoeuvre de réglage limité en rotation du prisme 11, déjà décrite ci-dessus pour la position active, serait sans résultat sur le mouvement en rotation du prisme 11, qui reste immobile pour toutes les positions en rotation de la pièce 72 rendues possibles autour du pivot 73 et du pion 71 par l'existence de la fente 80, la vis 76 étant supposée desserrée. En tout état de cause le changement d'orientation de la pièce 72 en position escamotée, d'ailleurs non souhaitable pour ne pas dérégler l'orientation préalablement choisie pour l'observation de jour, ne peut pas être obtenue par une poussée exercée contre la vis 76. On notera que la fente 80 n'est pas indispensable; pour que le mécanisme décrit ci-dessus fonctionne, il suffit que le blocage de la pièce 72 soit possible et le bord gauche de la fente 80 sur la figure 3 pourrait aussi bien constituer une partie du périmètre extérieur de la pièce 72. Au lieu de la vis 76 on pourrait aussi utiliser une vis vissée à travers la pièce 72 et pouvant entrer en contact avec le support 30.

Par ailleurs, l'invention ne se limite pas à un déplacement par rotation des réflecteurs 3 et 11. D'autres mouvements sont évidemment possibles et le premier réflecteur 3 peut notamment passer de sa position de nuit à sa position de jour (ou l'inverse) par un mouvement de translation avant-arrière (ou l'inverse).

**Revendications**

1. Appareil d'observation mixte jour-nuit, pour la conduite d'un véhicule, contenu dans un boîtier unique (1) comportant une voie de jour et une voie de nuit, un premier réflecteur d'entrée mobile (3) destiné à dévier les rayons lumineux d'entrée issus du champ de vision (4) au moins dans la direction de l'axe optique de la voie de nuit (5), la voie de nuit étant constituée par un objectif (6), un tube intensificateur de lumière (7) et un oculaire (8), la voie de jour étant constituée par un système optique de grossissement 1 comportant au moins un deuxième réflecteur de sortie (11), caractérisé en ce que les axes optiques de la voie de jour (9) et de la voie de nuit (5) s'étendent dans un même plan parallèle à un axe longitudinal (12) dudit véhicule, que le passage de la voie de nuit à la voie de jour ou réciproquement s'effectue par des moyens de déplacement (34,39) pour déplacer au moins le premier réflecteur parallèlement audit plan de façon à diriger soit vers l'axe optique de la voie de jour soit vers l'axe optique de la voie de nuit les rayons lumineux issus du champ de vison, que lesdits axes de la voie de jour et de la voie de nuit sont inclinés l'un vers l'autre vers le haut d'un angle de l'ordre d'une quinzaine de degrés et que lesdits moyens de déplacement impriment audit premier réflecteur une rotation de l'ordre de une à quelques dizaines de degrés, des moyens de tourillonnement (31) étant prévus à cet effet entre le support du premier réflecteur et ledit boîtier.

2. Appareil d'observation mixte jour-nuit selon la revendication 1, caractérisé en ce que ledit deuxième réflecteur (11) est mobile et que le passage de la voie de nuit à la voie de jour ou réciproquement s'effectue par des moyens de déplacement simultané (34, 67) pour déplacer simultanément les premier et deuxième réflecteurs parallèlement audit plan de façon que le deuxième réflecteur soit en position active (19) pour la vision de jour, qui est sensiblement celle qu'occupe le réflecteur de sortie d'un appareil d'observation classique de jour connu, et en position escamotée pour la vision de nuit.

3. Appareil d'observation mixte jour-nuit selon la revendication 1 ou 2, caractérisé en ce qu'il comporte des moyens d'obturation de la voie de jour automatiques (22) ainsi que des moyens de mise en service dudit tube intensificateur de lumière automatiques (58 à 63) lors du passage de la voie de jour à la voie de nuit qui fait passer le deuxième réflecteur de sa position active à sa position escamotée.

4. Appareil d'observation mixte jour-nuit selon la revendication 3, caractérisé en ce que lesdits moyens d'obturation de la voie de jour comportent un volet (22) articulé sur le support (30) du deuxième réflecteur et sollicité par des premiers moyens à ressort (25) vers une première position stable d'ouverture ou une deuxième position stable de fermeture, et que le passage de la première à la deuxième position dudit volet (22), lors du passage du deuxième réflecteur de la position active à la position escamotée, s'obtient par contact dynamique entre un bossage (29), prévu à cet effet sur ledit boîtier (1), et ledit volet (22).

5. Appareil d'observation mixte jour-nuit selon la revendication 4, caractérisé en ce que ledit volet comporte sur sa face (28) destinée à entrer en contact avec ledit bossage un dispositif d'appui en matériau souple épais (20) destiné à l'appui du front de l'observateur pendant l'observation de nuit.

6. Appareil d'observation mixte jour-nuit selon l'une des revendications 1 à 5, caractérisé en ce que lesdits premier et deuxième réflecteurs (3, 11) sont constitués par des prismes à réflexion totale et que la partie dudit système optique qui s'étend le long de l'axe optique de la voie de jour est constituée par un prisme (14) de forme sensiblement parallélépipédique.

7. Appareil d'observation mixte jour-nuit selon la revendication 6, caractérisé en ce que ledit prisme de forme sensiblement parallélépipédique (14) enveloppe partiellement l'objectif (6) de la voie de nuit, étant encastré dans ledit objectif au moyen d'une échancrure (15) qui a sensiblement la forme d'une portion de cylindre.

8. Appareil d'observation mixte jour-nuit selon l'une des revendications 1 à 7, caractérisé en ce que lesdits moyens de déplacement consistent en un levier (39) comportant une première (38) et une deuxième (42) extrémités mobiles, articulé autour d'un pivot (41) solidaire dudit boîtier (1) en un point situé entre lesdites extrémités, ladite deuxième exrémité (42) comportant un premier ergot (43) qui se déplace dans une première fente (44) liée au support (33) du premier réflecteur (3) et ladite première extrémité (38) comportant une deuxième fente (37) dans laquelle s'engage un deuxième ergot (36) solidaire d'une roue (34) actionnable manuellement dans ledit boîtier, des deuxièmes moyens à ressort (49) étant prévus pour solliciter ledit deuxième ergot en direction de la deuxième extrémité.

9. Appareil d'observation mixte jour-nuit selon la revendication 8, caractérisé en ce que ladite première fente (44) est de forme tronconique et pratiquée dans une partie (54) mobile en rotation autour d'un axe (55) solidaire du support (33) du premier réflecteur, que des troisièmes moyens à ressort (56) sollicitent ladite partie mobile de façon telle que ledit premier ergot (43) soit en contact permanent avec les deux bords de ladite fente (44), et que lesdits deuxièmes moyens à ressort (49) sont solidaires dudit levier (39) et actionnent sur ce levier un coulisseau (45) de façon telle que ce dernier exerce en permanence une pression contre ledit deuxième ergot (36).

10. Appareil d'observation mixte jour-nuit selon l'une des revendications 2 à 9, caractérisé en ce que lesdits moyens de déplacement simultané comportent, pour le déplacement dudit deuxième réflecteur (11), un dispositif à crémaillère (65) actionné par une roue dentée (67) actionnable manuellement dans ledit boîtier à partir desdits moyens de déplacement (34, 39), une extrémité libre dudit dispositif à crémaillère comportant un pion (71) qui s'engage dans une rainure (66) pratiquée dans une pièce (72) mobile en rotation autour d'un pivot (73) dans le support (30) du deuxième réflecteur, une extrémité de ladite rainure étant située sur l'axe (75) dudit pivot (73), des moyens de blocage (76) étant prévus pour immobiliser ladite pièce mobile (72) contre le support (30) du deuxième réflecteur (11) pour toute orientation mutuelle souhaitée entre ces derniers.

11. Appareil d'observation mixte jour-nuit selon l'une des revendications 1 à 10, caractérisé en ce qu'il s'agit d'un épiscope destiné à la conduite d'un char de combat.

12. Épiscope mixte jour-nuit selon la revendication 11, caractérisé en ce qu'il comporte des moyens pour une observation bioculaire de jour et de nuit et que son champ de vision est de l'ordre de 80° x 50° avec un grossissement voisin de 1.

**Patentansprüche**

1. Tag/Nachtsichtgerät für Fahrzeuge, wobei das Gerät in einem einfachen Gehäuse (1) mit einem Tagesgang und einem Nachtgang angeordnet ist, das einen ersten beweglichen Eingangsreflektor (3) enthält, der dafür sorgt, daß die Eingangslichtstrahlen aus dem Sehfeld (4) wenigstens in Richtung der optischen Achse des Nachtganges (5) gelenkt werden, wobei der Nachtgang durch ein Objektiv (6), eine Lichtverstärkerröhre (7) und ein Okular (8) gebildet und der Tagesgang durch ein optisches System mit einer Vergrößerung 1 gebildet werden, das wenigstens einen zweiten Ausgangsreflektor (11) enthält, *dadurch gekennzeichnet*, daß die optischen Achsen des Tagesganges (9) und des Nachtganges (5) sich in derselben Ebene parallel zu einer Längsachse (12) des Fahrzeuges erstrecken, daß der Übergang vom Nachtgang auf den Tagesgang oder umgekehrt durch Mittel (34, 39) zum Verlagern wenigstens des ersten Reflektors parallel zur genannten Ebene erfolgt, so daß die vom Sehfeld abgegebenen Lichtstrahlen auf die optische Achse des Tagesganges oder auf die optische Achse des Nachtganges gerichtet werden, daß die Achsen des Tages- und Nachtganges nach oben hin gegeneinander unter einem Winkel in der Größenordnung von etwa fünfzehn Grad gebogen sind und die Verlagerungsmittel auf dem ersten Reflektor eine Drehung in der Größenordnung von eins bis einigen zehn Grad aufprägen, wobei Lagermittel (31) zu diesem Zweck zwischen dem Träger des ersten Reflektors und dem Gehäuse vorgesehen sind.

2. Tag/Nachtsichtgerät nach Anspruch 1, *dadurch gekennzeichnet*, daß der zweite Reflektor (11) bewegbar ist und daß der Übergang vom Nachtgang auf den Tagesgang oder umgekehrt durch Mittel (34, 67) zum gleichzeitigen Verlagern der ersten und zweiten Reflektoren parallel zu dieser Ebene erfolgt, so daß der zweite Reflektor in einer aktiven Stellung (19) für den Tagesgang steht, die insbesondere ein Ausgangsreflektor eines herkömmlichen Sehgeräts zum Tagessehen und zum Nacht sehen eine eingezogene Stellung einnimmt.

3. Tag/Nachtsichtgerät nach Anspruch 1 oder 2, *dadurch gekennzeichnet*, daß darin automatische Verschlußmittel (22) für das Tagessehen und automatische Mittel zum Einschalten der Lichtverstärkerröhre (58... 63) beim Übergang vom Tagesgang auf den Nachtgang vorgesehen sind, wobei der zweite Reflektor von der aktiven in die eingezogene Stellung gebracht wird.

4. Tag/Nachtsichtgerät nach Anspruch 3, *dadurch gekennzeichnet*, daß die automatischen Verschlußmittel des Tagesganges aus einer geschlossenen Klappe (22) bestehen, die gelenkig am Träger (30) des zweiten Reflektors befestigt ist und von ersten Federmitteln (25) in eine erste stabile Öffnungsstellung oder in eine zweite stabile Verschlußstellung hineingezogen wird, und daß der Übergang der Klappe (22) von der ersten in die zweite Stellung beim Übergang des zweiten Reflektors aus der aktiven in die eingezogene Stellung durch dynamischen Kontakt zwischen einem zu diesem Zweck vorgesehenen Vorsprung (29) auf dem Gehäuse (1) und der Klappe (22) verwirklicht wird.

5. Tag/Nachtsichtgerät nach Anspruch 4, *dadurch gekennzeichnet*, daß die Klappe auf ihrer Fläche (28) zum Kontaktieren des Vorsprungs ein Tragelement aus einem dicken flexiblen Material (20) als Stütze für den Stirn des Beobachters während des Nachtsehens enthält.

6. Tag/Nachtsichtgerät nach einem der Ansprüche 1 bis 5, *dadurch gekennzeichnet*, daß die ersten und zweiten Reflektoren (3, 11) aus Prismen mit Gesamtreflexion bestehen, und daß der Teil des sich entlang der optischen Achse des Tagesganges erstreckenden optischen Systems durch ein Prisma (14) im wesentlichen in Form eines Quaders gebildet wird.

7. Tag/Nachtsichtgerät nach Anspruch 6, *dadurch gekennzeichnet*, daß das im wesentlichen quaderförmige Prisma (14) das Objektiv (6) des Nachtganges teilweise umschließt und mittels einer im wesentlichen teilzylinderförmigen Ausnehmung (15) in das Objektiv eingelassen ist.

8. Tag/Nachtsichtgerät nach einem der Ansprüche 1 bis 7, *dadurch gekennzeichnet*, daß die Verlagerungsmittel aus einem Hebel (39) mit einem ersten (38) und einem zweiten beweglichen Ende (42) bestehen, die gelenkig um einen eine Einheit mit dem Gehäuse (1) bildenden Zapfen (41) an einem zwischen diesen Enden befindlichen Punkt angebracht sind, wobei das zweite Ende (42) einen ersten Nocken (43) trägt, der sich in einem ersten Schlitz (44) verschiebt, der zum ersten Reflektor (3) gehört und das erste Ende (38) einen zweiten Schlitz (36) enthält, der zu einem Rad (34) gehört, der von Hand im Gehäuse betätigbar ist, und wobei zum Wegziehen des zweiten Nockens in der Richtung des zweiten Endes die zweiten Federmittel (49) vorgesehen sind.

9. Tag/Nachtsichtgerät nach einem der Ansprüche 1 bis 8, *dadurch gekennzeichnet*, daß der erste Schlitz (44) kegelstumpfartig und in einem beweglichen Teil zum Ausführen einer Drehbewegung um eine Achse (55) angebracht ist, die eine Einheit mit dem Träger (33) des ersten Reflektors bildet, daß dritte Federmittel (56) den beweglichen Teil derart wegziehen, daß der erste Nocken (43) in Dauerkontakt ist mit den beiden Seiten des Schlitzes (44), und daß die zweiten Federmittel (49) eine Einheit mit dem Hebel (39) bilden und auf dem Hebel einen Schieber (45) derart aktiviert, daß dieser auf den zweiten Nocken (36) ununterbrochen einen Druck ausübt.

10. Tag/Nachtsichtgerät nach einem der Ansprüche 2 bis 9, *dadurch gekennzeichnet*, daß die Mittel zur gleichzeitigen Verlagerung eine Zahnstangenvorrichtung (65) zum Verlagern des zweiten Reflektors (11) enthalten, und diese Vorrichtung wird durch ein von Hand bedienbares Zahnrad (67) im Gehäuse ausgehend von den Verlagerungsmitteln (34, 39) aktiviert, wobei ein freies Ende der Zahnstangenvorrichtung einen Vorsprung (71) enthält, der mit einer Nut (66) zusammenarbeitet, die in einem um einen Zapfen (73) im Träger (30) des zweiten Reflektors drehbaren Teil (72) angebracht ist, wobei ein Ende dieser Nut auf der Achse (75) des Zapfens (73) liegt, wobei Blockierungsmittel (76) zum Blockieren des drehbaren Teils (72) gegen den Träger (30) des zweiten Reflektors (11) für jede gewünschte gegenseitige Orientierung zwischen diesen letzten vorgesehen sind.

11. Tag/Nachtsichtgerät nach einem der Ansprüche 1 bis 10, *dadurch gekennzeichnet*, daß es sich dabei um ein Episkop zur Hilfe beim Führen eines Panzers handelt.

12. Episkop nach Anspruch 11, *dadurch gekennzeichnet*, daß darin binokulare Tag/Nacht-Beobachtungsmittel vorgesehen sind und daß ihr Sehfeld eine Grüße von 80° x 50° bei einer Vergrößerung nahe bei 1 hat.

## Claims

1. A combined night/day viewing apparatus for guiding a vehicle contained in a single housing (1) comprising a night path and a day path as well as a first mowable input reflector (3) for causing the input light beams originating from the field of view (4) to deviate at least in the direction of the optical axis of the night path (5), the night path being constituted by an objective (6), a light intensifier tube (7) and an ocular (8) and the day path being constituted by an optical system having an enlargement 1 comprising at least one second output reflector (11), characterized in that the optical axes of the day path (9) and of the night path (5) extend in the same plane parallel to a longitudinal axis (12) of the said vehicle, and in that the passage from the night path to the day path or conversely is effected by displacement means (34, 39) for displacing at least the first reflector parallel to the said plane so that the light beams originating from the field of view are directed either to the optical axis of the day path or to the optical axis of the night path, that the said axis of the day path and that of the night path are inclined with respect to each other upwards through an angle of the order of fifteen degrees and that the said displacement means impress on the said first reflector a rotation of the order of one to a few tens of degrees, pivoting means (31) being provided to this end between the support of the first reflector and the said housing.

2. A combined day/night viewing apparatus as claimed in claim 1, characterized in that the said second reflector (11) is mowable and the passage from the night path to the day path or conversely is effected by simultaneous displacement means (34, 67) for displacing simultaneously the first and second ref lectors parallel to the said plane so that the second reflector is in the active position (19) for the day view, which is substantially that occupied by the output reflector of a conventional known day viewing apparatus and in a concealed position for the night view.

3. A combined night/day viewing apparatus as claimed in claim 1 or 2, characterized in that it comprises automatic obturation means of the day path (22) and automatic means (58 to 63) for making operative the light intensifier tube during the passage from the day path to the night path, which causes the second reflector to pass from its active position to a concealed position.

4. A combined night/day viewing apparatus as claimed in Claim 3, characterized in that the said obturation means of the day path comprise a shutter (22) hinged on the support (30) of the second reflector and pulled by first spring means (25) to a first stable opened position or a second stable closed position, and in that the passage from the first to the second position of the said shutter (22) during the passage of the second ref lector from the active position to the concealed position is obtained by dynamic contact between an embossed part (29) provided for this purpose on the said housing (1) and the said shutter (22).

5. A combined night/day viewing apparatus as claimed in claim 4, characterized in that the said shutter comprises on its surface (28) serving to enter into contact with the said embossed part a supporting member (20) of a flexible thick material for supporting the front part of the observer's body during viewing by night.

6. A combined night/day viewing apparatus as claimed in any one of claims 1 to 5, characterized in that the said first and second reflectors (3, 11) are constituted by total-reflection prisms and in that the part of the said optical system which extends along the optical axis of the day path is constituted by a prism (14) substantially in the form of a parallelepipedon.

7. A combined night/day viewing apparatus as claimed in claim 6, characterized in that the said prism substantially in the form of a parallelepipedon (14) partly encloses the objective (6) of the night path and is recessed into the said objective by means of an identation (15) substantially in the form of a part of a cylinder.

8. A combined night/day viewing apparatus as claimed in any one of claims 1 to 7, characterized in that the said displacement means consist of a lever (39) comprising a first (38) and a second mowable end (42) hinged about a pivot 41 integral with the said housing 1 and a point lying between the said ends, the said second end 42 carrying a first bolt (43) which is displaced in a first slot (44) associated with the support (33) of the first reflector (3) and the said first end (38) having a second slot (37) which engages a second bolt (36) integral with a wheel (34) that can be operated manually in the said housing, while second spring means (49) are provided for pulling the said second bolt in the direction of the second end.

9. A combined night/day viewing apparatus as claimed in claim 8, characterized in that the said first slot (44) is in the form of a truncated cone and is provided in a mowable part (54) adapted to rotate about an axis (55) integral with the support (33) of the first reflector, in that third spring means (56) hinge the said mowable part in such a manner that the said first bolt (43) is in permanent contact with the two edges of the said slot (44), and in that the said second spring means (49) are integral with the said lever (39) and act upon this lever by a slide (45) in such a manner that the latter permanently exerts a pressure on the said second bolt (36).

10. A combined night and day viewing as claimed in any one of claims 2 to 9, characterized in that the said means for simultaneous displacement comprise for the displacement of the said second reflector (11) a toothed-rim member (65) operated by a toothed wheel (67) that can be operated manually in the said housing from the said displacement means (34, 39), a free end of the said toothed-rim member carrying a pin (71) which engages a groove (66) provided in a mowable part (72) adapted to rotate about a pivot (73) in the support (30) of the second reflector, an end of the said groove being situated on the axis (75) of the said pivot (73), blocking means (76) being provided for immowably fixing the said mowable member (72) to the support (30) of the second reflector (11) for any desired mutual orientation between these elements.

11. A combined night/day viewing apparatus as claimed in any one of claims 1 to 10, characterized in that an episcope is concerned intended for driving a tank.

12. A combined night/day episcope as claimed in Claim 11, characterized in that it comprises means for a binocular viewing by night and by day and in that its field of view is of the order of 80° x 50° with an enlargement close to 1.

EP 0 192 309 B1

FIG.1

FIG.2

FIG.3

FIG.4